# EUROPEAN PATENT APPLICATION

(11) **EP 3 968 101 A1**
(43) Date of publication of application: **16.03.2022**
(21) Application number: 20856068.0
(22) Date of filing: 18.08.2020
(51) Int. Cl.: G04G 21/00, G06F 3/041

(54) **SMART WATCH AND TOUCH CONTROL METHOD THEREFOR**

(30) Priority: 30.08.2019 CN 201910812669
(71) Applicant: Anhui Huami Information Technology Co., Ltd., Hefei, Anhui 230088 (CN)
(72) Inventor: LV, Baitao, Hefei, Anhui 243000 (CN); MIN, Bing, Hefei, Anhui 243000 (CN); QIAO, Zhimin, Hefei, Anhui 243000 (CN)
(74) Representative: Bandpay & Greuter
(86) International application number: PCT/CN2020/109875
(87) International publication number: WO 2021/036873

(57) **Abstract**

The present disclosure provides a smart watch. The smart watch includes a watch body; and hands, a touch display component and a control component which are arranged in the watch body. The touch display component is arranged below the hands, and includes a touch region and a non-touch region. The control component is connected with the hands and electrically coupled with the touch display component, and the control component is configured to: in response to a touch start operation, control the hands to rotate so that a projection area projected by the hands on the touch display component is located in the non-touch region; and in a case that the projection area is located in the non-touch region, start a touch function of the touch display component.

## Description

### TECHNICAL FIELD

The present disclosure relates to wearable electronic devices, and in particular, to smart watches and touch methods thereof.

### BACKGROUND

With the development of wearable electronic devices, smart watches have become popular wearable electronic devices. For smart watches that have both metal hands and a touch display component, the metal hands may interfere with touch performance of the touch display component.

### SUMMARY

A first aspect of embodiments of the present disclosure provides a smart watch. The smart watch includes a watch body; and hands, a touch display component and a control component which are arranged in the watch body, where the touch display component is arranged below the hands, and includes a touch region and a non-touch region; the control component is connected with the hands and electrically coupled with the touch display component, and the control component is configured to: in response to a touch start operation, control the hands to rotate so that a projection area projected by the hands on the touch display component is located in the non-touch region; and in a case that the projection area is located in the non-touch region, start a touch function of the touch display component.

Optionally, an area of the non-touch region is larger than an area of the projection area.

Optionally, the non-touch region extends across the touch display component in a plane parallel to a hand rotation surface.

Optionally, the touch display component includes a touch screen and a display screen, and the touch screen includes the touch region and the non-touch region.

Optionally, the touch screen includes touch electrodes, and the touch electrodes are arranged in the touch region.

Optionally, the touch screen includes first touch electrodes arranged in the touch region and second touch electrodes arranged in the non-touch region; the first touch electrodes are arranged in a predetermined direction and are electrically connected; adjacent second touch electrodes are insulated from each other.

Optionally, the touch screen includes first touch electrodes arranged in the touch region and second touch electrodes arranged in the non-touch region; the control component is further configured to: in response to the touch start operation, enable the first touch electrodes and disable the second touch electrodes.

Optionally, the control component includes: a controller electrically coupled with the touch display component; and a driver electrically coupled with the controller and including rotation shaft connected with the hands; where the controller is configured to: control the driver to drive the rotation shaft so as to drive the hands to rotate, further in response to the touch start operation, control the hands to rotate so that the projection area projected by the hands on the touch display component is located in the non-touch region, and control the touch display component.

Optionally, the touch display component is provided with a through hole; the driver and the controller are arranged on a side of the touch display component opposite to the hands, and the rotation shaft passes through the through hole.

Optionally, the control component further includes a circuit board, and the controller is mounted on the circuit board; the circuit board is provided with a first mounting hole corresponding to the through hole, and the driver is mounted in the first mounting hole.

Optionally, a support member is provided between the touch display component and the circuit board; an upper part of the support member supports the touch display component, a mounting cavity is formed between a lower part of the support member and the circuit board, and the controller is located in the mounting cavity; the support member is provided with a second mounting hole corresponding to the first mounting hole, and the driver is inserted into the second mounting hole.

Optionally, the smart watch further includes: a detection member electrically coupled with the controller and configured to detect the touch start operation.

A second aspect of the embodiments of the present disclosure provides a smart watch touch method. The touch method is applied to the smart watch according to the first aspect. The touch method includes: in response to a touch start operation, controlling, by a control component, hands to rotate so that projection area projected by the hands on a touch display component is located in a non-touch region, and in a case that the projection area is located in the non-touch region, starting, by the control component, a touch function of the touch display component.

According to the embodiments of the present disclosure, optionally, controlling, by the control component, the hands to rotate so that the projection area projected by the hands on the touch display component is located in the non-touch region includes: obtaining, by the control component, current position information of the hands and position information of the non-touch region; determining, according to the current position information of the hands and the position information of the non-touch region, a smaller one of angles formed by the hands and the non-touch region as a first angle, and a rotation direction of the hands; controlling the hands to rotate according to the first angle and the rotation direction.

Optionally, the method further includes: detecting the touch start operation; in response to not detecting the touch start operation, driving, by the control component, the hands to rotate to indicate time, and turning off, by the control component, the touch function of the touch display component.

Optionally, the method further includes: in response to a touch turn-off operation, turning off, by the control component, the touch function of the touch display component, and controlling, by the control component, the hands to rotate to positions corresponding to current time.

Accordingly, the hands will not interfere with the touch operation so as to ensure that the touch operation is performed successfully.

### BRIEF DESCRIPTION OF THE DRAWINGS

FIG. 1 is a schematic structural diagram illustrating a smart watch according to an example embodiment of the present disclosure.
FIG. 2 is a cross-sectional view illustrating a watch body of a smart watch according to an example embodiment of the present disclosure.
FIGs. 3-7 are schematic diagrams illustrating a partial structure of a touch display component in a watch body of a smart watch according to different example embodiments of the present disclosure.
FIG. 8 is a schematic diagram of assembling partial components in a watch body of a smart watch according to an example embodiment of the present disclosure.
FIG. 9 is a schematic diagram illustrating a state of a smart watch in a touch mode according to an example embodiment of the present disclosure.
FIG. 10 is a flowchart illustrating a smart watch touch method according to an example embodiment of the present disclosure.
FIG. 11 is a flowchart illustrating a smart watch touch method according to another example embodiment of the present disclosure.
FIG. 12 is a flowchart illustrating a smart watch touch method according to another example embodiment of the present disclosure.
FIG. 13 is a flowchart illustrating a smart watch touch method according to another example embodiment of the present disclosure.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

Terms used in this application are only for the purpose of describing specific embodiments, and are not intended to limit the application. Unless otherwise defined, technical or scientific terms used in the present application shall have usual meanings understood by those of ordinary skill in the art to which the application belongs. Similar words such as "one" or "a" used in the specification and claims of the present application do not mean a quantity limit, but mean that there is at least one. Unless otherwise stated, "including" or "comprising" and other similar words mean that elements or items existing before "include" or "comprise" cover elements or items listed after "including" or "comprising," and their equivalences, and do not exclude other elements or items. Similar words such as "connect" or "couple" are not limited to physical or mechanical connections, and may include electrical connections, regardless of whether they are direct or indirect.

"A," "the," and "said" in their singular forms used in the specification and claims of the present application are intended to include plurality, unless clearly indicated otherwise in the context. It should also be understood that the term "and/or" as used herein refers to and includes any and all possible combinations of one or more of the associated listed items.

In some embodiments, a touch display component adopted by a smart watch includes a touch screen and a display screen. In an example, the touch display component has a structure of In Cell Touch Panel, that is, a touch part is embedded in the display screen; or, the touch display component has a structure of On Cell Touch Panel, that is, the touch screen is covered on the display screen.

Generally, a capacitive touch screen is used as the touch screen in the touch display component. The capacitive touch screen includes a plurality of touch electrodes, and a touch chip connected with the plurality of touch electrodes. The plurality of touch electrodes have an indium tin oxide pattern (ITO pattern) covering the touch screen. The plurality of touch electrodes are arranged in rows and columns, and adjacent touch electrodes in a same row or a same column are electrically connected with each other (for example, connected by a bridge structure). In addition, touch electrodes in each row and each column are connected with the touch chip through wirings.

When an external object (such as a finger or a stylus) with conductive properties acts on the touch display component (for example, when a distance between the external object and the touch screen in the touch display component is less than a preset threshold), the external object and the touch electrodes generate an inductive capacitance. The touch chip detects the inductive capacitance to determine position information of the external object acting on the touch display component so as to realize a touch function of the touch display component.

Generally, metal hands are arranged above the touch display component in the smart watch. In this case, when the external object acts above the metal hands, the metal hands will interfere with the touch electrodes to generate the inductive capacitance, thereby affecting touch accuracy. For this problem, the following two solutions have been proposed.

In a first solution, the touch display component is designed by separating the touch screen and the display screen. The touch screen is arranged on a cover plate of a watch body in the smart watch, and the display screen is arranged in the watch body, the touch screen and the display screen are connected through a flexible circuit board. The metal hands are arranged between the touch screen and the display screen. In this way, the touch screen, the display screen and the metal hands can be used properly.

In a second solution, a transparent touch display component is arranged above the hands. In this way, the metal hands are exposed through a transparent display screen, and interference of the metal hands with the touch display component is avoided.

However, it is difficult to assemble the touch display component and the display screen in the first solution, and manufacturing costs of the transparent touch display component in the second solution are high.

Based on the above cases, embodiments of the present disclosure provide a smart watch, and a touch method thereof.

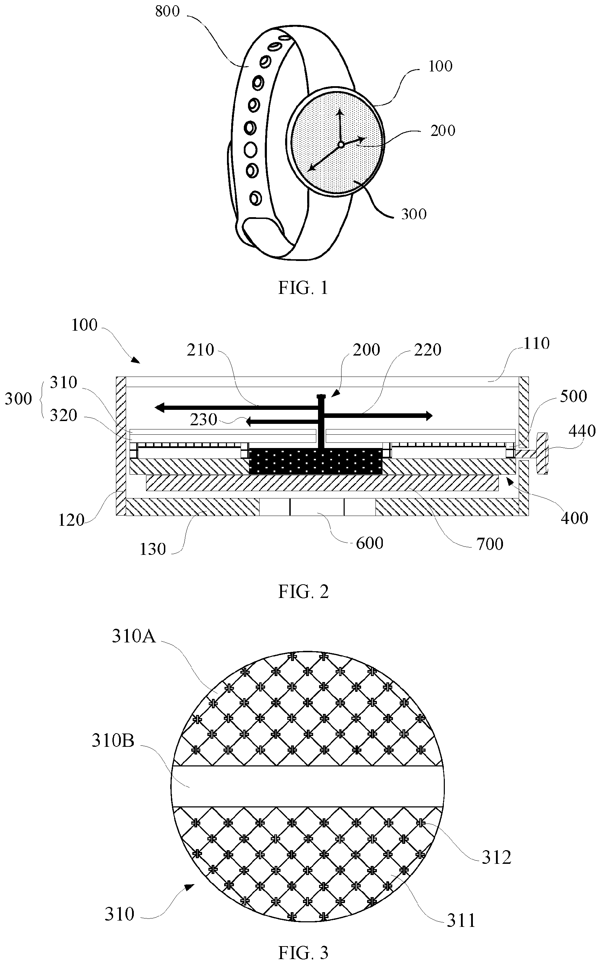

FIG. 1 is a schematic structural diagram illustrating a smart watch according to an example embodiment of the present disclosure. As shown in FIG. 1, the smart watch can include a fixing member 800, and a watch body 100 connected with the fixing member 800. The fixing member 800 can realize a wearable function of the smart watch. For example, the fixing member 800 is a metal watch band, a leather watch band, a rubber watch band or the like. The watch body 100 can provide an operation interface of the smart watch, which is used to realize a touch function, a display function and a time indication function of the smart watch.

As shown in FIG. 2, the watch body 100 can include a cover plate 110, a side enclosure 120 and a bottom plate 130. The cover plate 110 is arranged opposite to the bottom plate 130. The side enclosure 120 is located between the cover plate 110 and the bottom plate 130. The cover plate 110, the side enclosure 120 and the bottom plate 130 are enclosed to form a cavity. In an example, the cover plate 110 is a transparent cover plate (for example, a resin cover plate, or a glass cover plate), which is convenient for displaying the inside of the cavity.

Hands 200 and a touch display component 300 can be arranged in the cavity of the watch body 100, and the hands 200 are arranged above the touch display component 300. There is no obstruction between the hands 200 and the cover plate 110. Accordingly, if the cover plate 110 is transparent, a user can directly observe, from the outside, the hands 200 and contents that are displayed on the touch display component 300 and which are not obstructed by the hands 200.

The hands 200 can include at least an hour hand 210 and a minute hand 220. In an example, the hands 200 further include a second hand 230. The hour hand 210, the minute hand 220 and the second hand 230 can rotate coaxially.

The touch display component 300 can include a touch screen 310 having a touch function, and a display screen 320 having a display function. When the touch display component 300 has a structure of In Cell Touch Panel, the touch screen 310 is embedded in the display screen 320. When the touch display component 300 has a structure of On Cell Touch Panel, the touch screen 310 covers the display screen 320 (as shown in FIG. 2).

In an example, the display screen 320 can be enabled independently of the touch screen 310. Specifically, when the touch screen 310 is enabled, the display screen 320 can or may not display an image. In an example, the display screen 320 and the touch screen 310 are enabled synchronously. Specifically, when the touch screen 310 is enabled, the display screen 320 can display the image synchronously to assist in a touch operation.

In some examples, a distance between the cover plate 110 and the touch display component 300 can be set, so that when an external object (such as a finger or a stylus) with conductive properties contacts the cover plate 110, the touch display component 300 can be triggered to generate an inductive capacitance.

As shown in FIGs. 3-7, the touch screen 310 can include one or more touch regions 310A and a non-touch region 310B. In this way, when the touch display component 300 is enabled, only the touch region 310A has the touch function, and the non-touch region 310B does not have the touch function.

As an embodiment, as shown in FIG. 3, a plurality of touch electrodes 311 are arranged in the touch regions 310A, and no touch electrode is arranged in the non-touch region 310B. That is, the plurality of touch electrodes 311 are arranged only in a region of the touch screen 310 corresponding to the touch regions 310A. Moreover, in the touch regions 310A, the touch electrodes 311 are arranged in rows or columns. Adjacent touch electrodes 311 in a same row or a same column are connected by bridges 312.

In this way, the touch regions 310A have the touch function, while the non-touch region 310B does not have the touch function even when the touch display component 300 is enabled. In this way, the touch function of the non-touch region 310B can be eliminated.

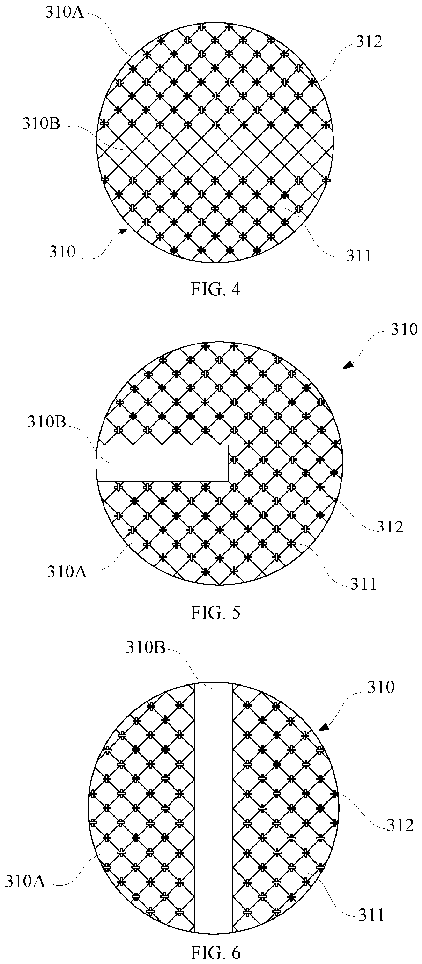

As another embodiment, as shown in FIG. 4, a plurality of touch electrodes 311 are arranged in both the touch regions 310A and the non-touch region 310B. In the touch regions 310A, the plurality of touch electrodes 311 are arranged in a predetermined direction and are electrically connected. For example, in the touch regions 310A, the plurality of touch electrodes 311 are arranged in rows or columns, and adjacent touch electrodes 311 in a same row or a same column are connected by bridges 312. In the non-touch region 310B, adjacent touch electrodes 311 are insulated from each other. For example, in the non-touch region 310B, no bridge is arranged between adjacent touch electrodes 311 in the same row or the same column.

In this way, by removing the bridges in partial region of the touch screen 310 to cut off the electrical connection between adjacent touch electrodes 311, the touch screen 310 is divided into the touch regions 310A and the non-touch region 310B. In this way, there is no need to change the arrangement of the plurality of touch electrodes 311 in the touch screen 310, which is convenient for its manufacturing.

As another embodiment, the touch electrodes are arranged in both the one or more touch regions and the non-touch region. In addition, in the one or more touch regions and the non-touch region, adj acent touch electrodes in the same row or the same column are electrically connected (for example, connected by bridges). In other words, this arrangement does not change the structure of the touch screen. When the touch screen 310 is enabled, a control component in the smart watch only enables the touch electrodes in the touch regions, and disables the touch electrodes in the non-touch region. For example, electrical signals may not be provided to the touch electrodes in the non-touch region, and/or electrical signals generated by the touch electrodes in the non-touch region may not be received.

In this way, the touch electrodes in the non-touch region can be disabled through the control of the control component in the smart watch, so that the non-touch region does not have the touch function. In this way, the structure of the touch screen does not need to be changed, and hardware costs of a terminal device are reduced. Moreover, in this way, a user-defined non-touch region can be realized, which further improves user experience.

It should be noted that in the drawings, only diamond-shaped touch electrodes 311 are shown as an example, and touch electrodes in other shapes, such as rectangles and triangles, can be used.

In an embodiment, the touch regions 310A are arranged on at least two sides of the non-touch region 310B. At this time, rows or columns of the touch electrodes 311 in the touch regions 310A are interrupted by the non-touch region 310B. In this case, wirings are added to the touch screen 310, so that the touch electrodes 311 arranged on two sides of the non-touch region 310B in the touch screen 310 are connected with a touch chip. Accordingly, it is ensured that the touch regions 310A in the touch screen 310 have the touch function.

In an embodiment, in a plane parallel to a rotation surface of the hands 200, the non-touch region 310B extends across the touch display component 300, and a symmetry axe of the non-touch region 310B coincides with a symmetry axe of the touch regions 310A. In this way, the touch regions 310A on two sides of the non-touch region 310B have a same area. Therefore, during a touch operation, inductive capacitances generated by the touch electrodes 311 in the touch regions 310A are symmetrical, which helps to increase touch accuracy of the touch display component 300 and improve user experience.

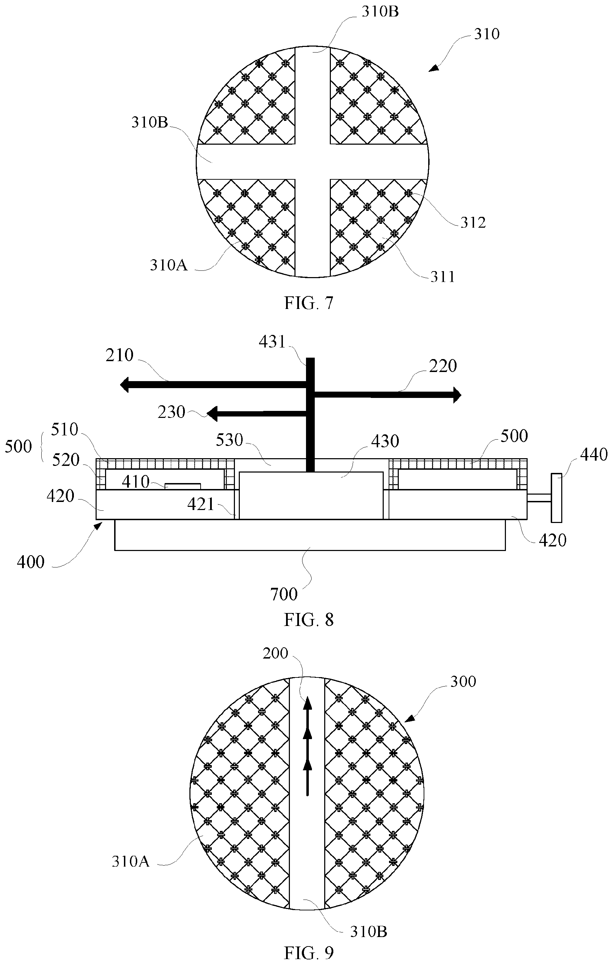

In some embodiments, as shown in FIG. 5, the non-touch region 310B does not extend across the touch region 310A. Alternatively, the non-touch region 310B extends across the touch region 310A. For example, as shown in FIG. 3, the non-touch region 310B extends across the touch display component 300 along a direction from 3 o'clock to 9 o'clock (i.e., a horizontal direction). Alternatively, as shown in FIG. 6, the non-touch region 310B extends across the touch display component 300 along a direction from 6 o'clock to 12 o'clock (i.e., a longitudinal direction). Alternatively, as shown in FIG. 7, two non-touch regions 310B are arranged on the touch display component 300, and the two non-touch regions 310B are intersected, such as perpendicularly, or at an angle of 45° or 60° (only the case that two non-touch regions 310B intersect perpendicularly is shown in the drawings).

In some embodiments, an area of the non-touch region 310B is larger than an area projected by the hands 200 on the touch display component 300. When the hands 200 include the hour hand 210, the minute hand 220 and the second hand 230, the area of the non-touch region 310B is larger than a maximum value of projection areas projected by the hour hand 210, the minute hand 220 and the second hand 230 on the touch display component 300. In this way, during the rotation of the hands 200, a projection area projected by the hands 200 on the touch display component 300 can be completely located in the non-touch region 310B at some time.

In an embodiment, the smart watch further includes a control component 400 arranged in the cavity of the watch body 100. Referring to FIG. 8, the control component 400 can include a controller 410 electrically coupled with the touch display component 300. For example, the controller 410 can be connected with the touch chip of the touch screen 310 in the touch display component 300 through wirings, and can be connected with the display screen 320 in the touch display component 300 through wirings. In this way, the controller 410 can control the touch display component 300 to realize the touch function of the touch region 310A and the display function. In addition, the touch chip of the touch screen 310 can send received touch position information corresponding to a touch operation to the controller 410, so that the controller 410 can give feedback according to the touch operation.

The control component 400 is further connected with the hands 200 and configured to drive the hands 200 to rotate to indicate time. The control component 400 can further include a circuit board 420 arranged below the display screen 320, and the controller 410 is mounted on the circuit board 420. The touch display component 300 can be connected with the circuit board 420 through wirings.

In an embodiment, a support member 500 is arranged in the watch body 100. Referring to FIG. 2 and FIG. 8, the support member 500 can be arranged below the touch display component 300. A top plate 510 of the support member 500 supports the touch display component 300 to ensure stability of the touch display component 300. Edges of the top plate 510 of the support member 500 extend downward to form side edges 520. The side edges 520 are connected with the circuit board 420, so that a mounting cavity is formed between the support member 500 and the circuit board 420. The controller 410 or other component on the circuit board 420 is arranged in the mounting cavity, thereby ensuring that the controller 410 and other component have a stable working environment.

A first mounting hole 421 can be arranged in the circuit board 420. The control component 400 can further include a driver 430 mounted in the first mounting hole 421. For example, the driver 430 is interference fit with the first mounting hole 421, or the driver 430 is arranged in the first mounting hole 421 and connected with the circuit board 420 through a connector or an adhesive. Through the first mounting hole 421, both mounting stability of the driver 430 and overall structural integration of the control component 400 can be ensured.

In addition, a second mounting hole 530 corresponding to the first mounting hole 421 can be arranged in the support member 500. The driver 430 can be inserted into the second mounting hole 530, thereby further ensuring the mounting stability of the driver 430.

In an embodiment, the driver 430 serves as a movement of the smart watch, and includes a driving motor and a transmission component. The driving motor in the driver 430 is electrically coupled with the controller 410, so that the controller 410 controls the driving motor in the driver 430 to be started or turned off.

In an example, the driving motor in the driver 430 is electrically coupled with the controller 410 through an input/output (I/O) interface. The controller 410 outputs a driving signal to control the driving motor to rotate. In an example, the driver 430 further includes a driving chip electrically connected with the driving motor, and the driving chip is in communication connection with the controller 410. The driving chip can receive a driving instruction sent by the controller 410 to control the driving motor to rotate.

The transmission component is connected with the driving motor, and the transmission component includes a rotation shaft 431 connected with the hands 200. When the controller 410 enables the driver 430, the driving motor drives the transmission component to rotate, so that the rotation shaft 431 rotates, thereby driving the hands 200 to rotate.

It should be noted that when the smart watch includes the hour hand 210, the minute hand 220 and the second hand 230, the driver 430 can include driving motors corresponding to the hour hand 210, the minute hand 220 and the second hand 230 respectively. The transmission component can further include a switching component configured to connect the rotation shaft 431 with different driving motors to drive the hour hand 210, the minute hand 220 and the second hand 230 respectively. For implementation of the driving motor and the transmission component in the driver 430, reference can be made to, for example, a movement structure of a mechanical watch.

In an embodiment, as shown in FIG. 2 or FIG. 8, the controller 410, the circuit board 420 and the driver 430 in the control component 400 are located below the touch display component 300, thereby avoiding the control component 400 from being exposed mostly. In this case, a through hole penetrating the touch screen 310 and the display screen 320 can be arranged in the touch display component 300. The rotation shaft 431 passes through the through hole, and extends to a side of the touch display component 300 opposite to the driver 430 so as to be connected to the hands 200.

In an embodiment, the control component 400 further includes a detection member electrically coupled with the controller 410, and the detection member is configured to detect a touch start operation. The controller 410, in response to the detection member detecting the touch start operation, can start the touch function of the touch display component 300, that is, the touch function of the touch region 310A of the touch display component 300.

In an example, as shown in FIG. 2 or FIG. 8, a button 440 mounted on the side enclosure 120 of the watch body 100 can be used as the detection member. In this case, the touch start operation can be detected by detecting a trigger signal output when the button 440 is pressed. In addition, the button 440 can be electrically coupled with the controller 410, so that the controller 410 can receive the trigger signal to start the touch function of the touch display component 300.

As an example, referring to FIG. 9, when the detection member detects the touch start operation, the controller 410 can control the driver 430 to drive the hands 200 to rotate, so that a projection area projected by the hands 200 on the touch display component 300 is located in the non-touch region 310B. Then, the controller 410 can start the touch function of the touch display component 300. At this time, there is no obstruction between the cover plate 110 and the touch region 310A, so that the hands 200 will not interfere with the touch electrodes 311 in the touch region 310A to generate the inductive capacitance. Moreover, the area of the non-touch region 310B is larger than the area projected by the hands 200 on the touch display component 300.

In this way, the obstruction between the touch region 310A and the cover plate 110 can be eliminated, and the interference of the hands 200 with the touch operation of the touch display component 300 can be avoided. Accordingly, it can be ensured that the touch operation is performed successfully.

In an example, as shown in FIG. 2, a vital sign detection component 600 can be arranged on the bottom plate 130 of the watch body 100. The vital sign detection component 600 can be electrically connected with the controller 410 to send detected vital sign information to the controller 410. In an example, the vital sign detection component 600 is configured to detect a heart rate, a blood pressure, a blood oxygen concentration, an electrocardiogram signal and the like. In addition, a battery component 700 can be arranged in the watch body 100, and the battery component 700 is configured to supply power to the touch display component 300, the controller 410, the vital sign detection component 600 and the like.

In summary, the smart watch provided by the embodiments of the present disclosure can avoid the interference of the hands with the touch display component, thereby increasing touch accuracy and sensitivity, and improving user experience. In addition, the touch display component 300 is an integrated structure of the touch screen 310 and the display screen 320, which is convenient for assembly.

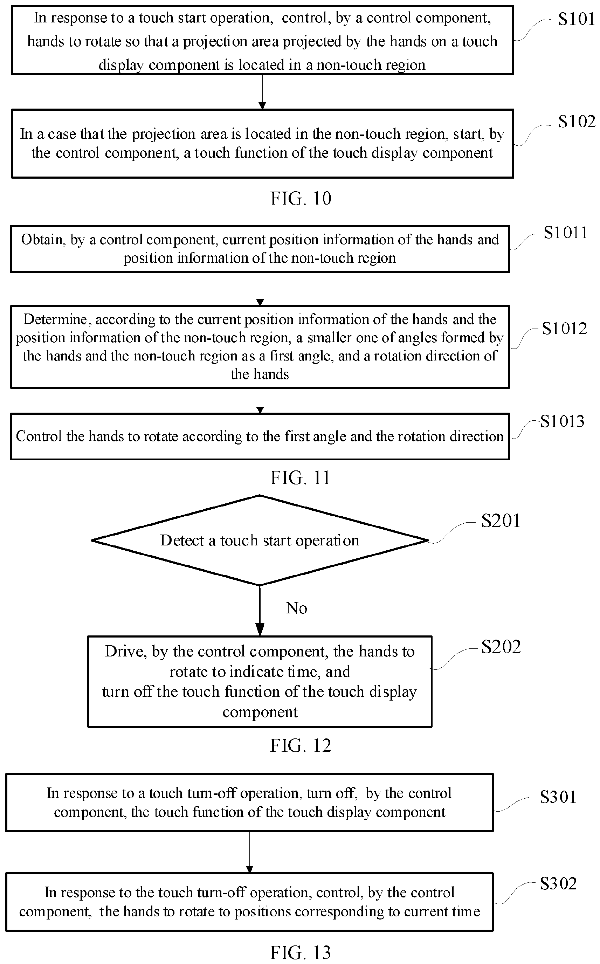

An embodiment of the present disclosure provides a smart watch touch method. The method is applicable to the above-mentioned smart watch. As shown in FIG. 10, the touch method can include steps S101 to S102.

At step S101, in response to a touch start operation, a control component controls hands to rotate so that a projection area projected by the hands on a touch display component is located in a non-touch region.

At step S102, in a case that the projection area is located in the non-touch region, the control component starts a touch function of the touch display component.

In this way, when the touch function of the touch display component is started, the hands have rotated to a position corresponding to the non-touch region. Therefore, the hands will not interfere with the touch display component during a touch operation, which can avoid touch errors and improve user experience.

In an embodiment, controlling the hands to rotate by the control component in the step S101 can be implemented through steps S1011 to S1013 as shown in FIG. 11.

At step S1011, the control component obtains current position information of the hands and position information of the non-touch region.

In an example, the reference position of both the current position information of hands 200 and the position information of the non-touch region 310B is the position of the hands 200 at twelve o'clock. Accordingly, the current position information of the hands 200 can include: angles formed by the hands 200 (including an hour hand 210, a minute hand 220 and a second hand 230) at current time and the reference position along a specified direction (for example, a clockwise direction or a counterclockwise direction).

The position information of the non-touch region 310B can include angles formed by a symmetry axis of the non-touch region 310B and the reference position along the specified direction. In this way, it can be ensured that the projection area projected by the hands on the touch display component after the hands rotate can be completely located in the non-touch region. In addition, the position information of the non-touch region 310B is fixed position information of a touch display component 300, and can be pre-stored, for example, in the control component 400. Therefore, the control component 400 can directly read the position information of the non-touch region 310B in response to the touch start operation.

In an example, when the touch electrodes in the non-touch region are disabled by the control component so as to realize a non-touch function of the non-touch region, obtaining the position information of the non-touch region in the step S1011 can be implemented in the following method. Current using mode of the smart watch is determined, such as a left-hand wearing mode or a right-hand wearing mode. In an example, the using mode is preset by a user, and can be directly obtained by the control component. The position information of the non-touch region is determined according to the current using mode of the smart watch. For example, corresponding relationship between the using mode and the position information of the non-touch region is stored in the control component, so that the position information of the non-touch region can be obtained through the determined using mode.

Regarding corresponding relationship between the using mode and the non-touch region, in an example, in the left-hand wearing mode, the non-touch region is close to a left side of the touch display component in the smart watch (that is, close to a 9 o'clock side), and in the right-hand wearing mode, the non-touch region is close to a right side of the touch display component in the smart watch (that is, close to a 3 o'clock side). Alternatively, the position information of the non-touch region can be obtained by big data statistical analysis of conventional touch positions of a large number of users. In this way, the non-touch region can be arranged in a region where users have less touch operations, and the user experience can be improved.

It should be noted that when the touch electrodes in the non-touch region are disabled by the control component so as to realize the non-touch function of the non-touch region, a user can customize the position of the non-touch region according to specific needs. For example, if watch dials are different and/or an order of watch applications is different, positions of a controller that needs to be touched may be different. Therefore, the user can customize the position of the non-touch region based on a watch dial and/or an order of watch applications to facilitate touch operation and improve user experience.

At step S1012, according to the current position information of the hands and the position information of the non-touch region, a smaller one of angles formed by the hands and the non-touch region is determined as a first angle, and a rotation direction of the hands is determined.

For example, if the hands and the non-touch region form an angle of 120° in the clockwise direction, and the hands and the non-touch region form an angle of 240° in the counterclockwise direction, the first angle can be determined to be 120°. Moreover, the rotation direction of the hands can be determined, so that when the hands rotate in this direction, the first angle decreases. For example, in the above example, it can be determined that the rotation direction of the hands is clockwise. In this way, the hands can be quickly rotated to the position corresponding to the non-touch region.

At step S1013, the hands are controlled to rotate according to the first angle and the rotation direction.

In an example, the smart watch touch method as shown in FIG. 10 further includes: in response to the touch start operation, enabling, by the control component, the display screen. That is, the display screen and the touch screen can be enabled at the same time. For example, when the touch screen is enabled, the display screen can be synchronously enabled, and display images that assist in the touch operation, such as application icons and option menu icons.

In an example, the touch method further includes: in response to a display start operation, enabling, by the control component, the display screen. As an example, the display screen and the touch screen are respectively connected with the control component, so that the control component can respectively enable the display screen and the touch screen. At this time, the control component can enable the display screen in response to the display start operation. For example, the display start operation includes an operation of turning the watch body to a preset angle, or a button trigger operation.

In this case, the control component can control the hands to rotate to indicate time, while the display screen displays preset images (such as landscape photos), thereby improving appearance of the smart watch and user experience. The control component, when enabling the touch screen, can synchronously control the display screen to display the preset images so as to assist in the touch operation.

In an embodiment, as shown in FIG. 12, the touch method further includes steps S201 to S202.

At step S201, the touch start operation is detected. In an example, the smart watch includes a detection member connected with the control component. For example, the detection member is a button electrically coupled with the control component and outputting a trigger signal when being pressed. The touch start operation can be detected by detecting the trigger signal output by the button. Other devices, such as a speed sensor or a rotation angle sensor, can be used as the detection member.

In response to not detecting the touch start operation, the control component performs step S202, that is, the control component drives the hands to rotate to indicate time, and turns off the touch function of the touch display component. In response to detecting the touch start operation, the control component performs the steps S101 and S102.

In an embodiment, as shown in FIG. 13, the touch method further includes steps S301 to S302.

At step S301, in response to a touch turn-off operation, the control component turns off the touch function of the touch display component.

For example, if the control component does not detect the touch operation within a preset time period, it can be regarded as detecting the touch turn-off operation. For example, the control component can record the time of each touch operation, and monitor whether there is a touch operation within the preset time period after any touch operation, if no touch operation is detected within the preset time period, the control component can control the touch display component to turn off the touch function.

Alternatively, a virtual button for the touch turn-off operation can be provided on the touch display component, and the virtual button outputs a touch turn-off signal when being triggered. The control component can turn off the touch function of the touch display component in response to detecting the touch turn-off signal.

At step S302, in response to the touch turn-off operation, the control component controls the hands to rotate to positions corresponding to current time.

It should be noted that the order of the step S301 and the step S302 can be changed. In an example, the step S302 is performed first, and then the step S301 is performed, or the step S301 and the step S302 are performed synchronously.

The above embodiments are only exemplary and are not intended to limit the present disclosure. Based on the present disclosure, those skilled in the art may easily think of other variations, uses or adaptations of the embodiments of the present disclosure. These variations, uses or adaptations should be considered within the scope of the present disclosure.

## Claims

1. A smart watch, comprising:
a watch body; and
hands, a touch display component and a control component which are arranged in the watch body,
wherein the touch display component is arranged below the hands, and comprises a touch region and a non-touch region;
the control component is connected with the hands and electrically coupled with the touch display component, and the control component is configured to: in response to a touch start operation, control the hands to rotate so that a projection area projected by the hands on the touch display component are located in the non-touch region; and in a case that the projection area is located in the non-touch region, start a touch function of the touch display component.

2. The smart watch according to claim 1, wherein an area of the non-touch region is larger than an area of the projection area.

3. The smart watch according to claim 1, wherein the non-touch region extends across the touch display component in a plane parallel to a hand rotation surface.

4. The smart watch according to any of claims 1 to 3, wherein the touch display component comprises a touch screen and a display screen, and the touch screen comprises the touch region and the non-touch region.

5. The smart watch according to claim 4, wherein the touch screen comprises touch electrodes, and the touch electrodes are arranged in the touch region.

6. The smart watch according to claim 4, wherein the touch screen comprises first touch electrodes arranged in the touch region and second touch electrodes arranged in the non-touch region;
the first touch electrodes are arranged in a predetermined direction and are electrically connected;
adjacent second touch electrodes are insulated from each other.

7. The smart watch according to claim 4, wherein the touch screen comprises first touch electrodes arranged in the touch region and second touch electrodes arranged in the non-touch region;
the control component is further configured to: in response to the touch start operation, enable the first touch electrodes and disable the second touch electrodes.

8. The smart watch according to claim 1, wherein the control component comprises:
a controller electrically coupled with the touch display component; and
a driver electrically coupled with the controller and comprising a rotation shaft connected with the hands,
wherein the controller is configured to: control the driver to drive the rotation shaft so as to drive the hands to rotate; further in response to the touch start operation, control the hands to rotate so that the projection area projected by the hands on the touch display component is located in the non-touch region; and control the touch display component.

9. The smart watch according to claim 8, wherein the touch display component is provided with a through hole;
the driver and the controller are arranged on a side of the touch display component opposite to the hands, and the rotation shaft passes through the through hole.

10. The smart watch according to claim 9, wherein the control component further comprises a circuit board, and the controller is mounted on the circuit board;
the circuit board is provided with a first mounting hole corresponding to the through hole, and the driver is mounted in the first mounting hole.

11. The smart watch according to claim 10, wherein a support member is provided between the touch display component and the circuit board;
an upper part of the support member supports the touch display component, a mounting cavity is formed between a lower part of the support member and the circuit board, and the controller is arranged in the mounting cavity;
the support member is provided with a second mounting hole corresponding to the first mounting hole, and the driver is inserted into the second mounting hole.

12. The smart watch according to claim 8, further comprising: a detection member electrically coupled with the controller and configured to detect the touch start operation.

13. A smart watch touch method, the touch method being applied to a smart watch according to any one of claims 1 to 12, and comprising:
in response to the touch start operation, controlling, by the control component, the hands to rotate so that the projection area projected by the hands on the touch display component is located in the non-touch region, and in a case that the projection area is located in the non-touch region, starting, by the control component, the touch function of the touch display component.

14. The touch method according to claim 13, wherein controlling, by the control component, the hands to rotate so that the projection area projected by the hands on the touch display component is located in the non-touch region comprises:
obtaining, by the control component, current position information of the hands and position information of the non-touch region;
determining, according to the current position information of the hands and the position information of the non-touch region, a smaller one of angles formed by the hands and the non-touch region as a first angle, and a rotation direction of the hands;
controlling the hands to rotate according to the first angle and the rotation direction.

15. The touch method according to claim 13, further comprising:
detecting the touch start operation;
in response to not detecting the touch start operation, driving, by the control component, the hands to rotate to indicate time, and turning off the touch function of the touch display component.

16. The touch method according to claim 13, further comprising:
in response to a touch turn-off operation, turning off, by the control component, the touch function of the touch display component, and controlling the hands to rotate to positions corresponding to current time.
